# EUROPEAN PATENT APPLICATION

(11) **EP 1 650 247 A1**
(43) Date of publication of application: **26.04.2006**
(21) Application number: 04077902.7
(22) Date of filing: 21.10.2004
(51) Int. Cl.: C08G 59/50, C03C 25/36

(54) **Amines-epoxy compositions with high chemical resistance properties**

(71) Applicant: Resolution Research Belgium S.A., 1348 Ottignies Louvain-la-Neuve (BE)
(72) Inventor: Bossaerts, Jan Dirk Resolution Res. Belgium S.A., 1348 Ottignies Louvain-la-Neuve (BE); Rans, Marc Jozef Resolution Res. Belgium S.A., 1348 Ottignies Louvain-la-Neuve (BE)

(57) **Abstract**

The invention belongs to the field of epoxy resin curable compositions, more particularly an epoxy curable composition comprising aromatic halogenated glycidyl ether resins cured with amines, is intended to be used for the impregnation of fibers applicable or for the manufacturing of composite structures, laminations, coatings, floorings and putties applications which show particularly high resistance to aggressive chemicals.

## Description

The invention relates to epoxy resin curable compositions, more particularly to epoxy curable compositions, comprising aromatic halogenated glycidyl ether resins to be cured with aliphatic amines, which are intended for the impregnation of fibers applicable to the manufacturing of composite structures, laminates, coatings, flooring and putties applications and which show a particularly high resistance to aggressive chemicals in which they are immersed.

The aromatic amines and more particularly the diamines were introduced at an early stage into the epoxy technology. They are recognized in the art as the cured networks that provide improved heat and chemical resistance over that attained with the aliphatic amines. The aromatic amines generally react slowly with glycidyl ethers and usually require heat to achieve a fully cured network and also the maximum properties. The most commonly used aromatic amine is from far 4,4'-methylenedianiline (MDA) which is a solid (or semi-solid) and therefore is not always easy to formulate into epoxy resin compositions. Proposed solutions to these problems were directed to the formulation of blends with other aromatic amines or to add diluents, US 4,229,563 which discloses curing agents for epoxy resins derived from hydroxy or dihydroxy benzoic acid reacted with aliphatic polyamines. However, the chemical resistance of the cured films based thereof could not meet those of their obtained by curing with MDA based formulations. Therefore the need for an adequate alternative for the aromatic amine cured epoxy systems is still a current issue.

After extensive research and experimentation it has now surprisingly been found that a formulation comprising aromatic halogenated glycidyl ether resins could be cured with currently used aliphatic amines and leads to improved chemical resistant cured film over the epoxy systems known in the art.

An object of this invention is to provide an epoxy resin curable composition which is curable at ambient temperature and which provides a performance superior or equal to that on of the aromatic amine/epoxy resin cured compositions. The present invention provides compositions that fulfill this object. Accordingly the present invention relates to a curable or polymerizable epoxy resin composition comprising an epoxy resin part (a) which comprises a combination of:
(a,i) at least an aromatic halogenated glycidyl ether resin,
(a,ii) a non halogenated glycidyl ether resin and
(a,iii) optionally a reactive diluent or/and a solvent,
and a harderner part (b) comprising aliphatic, cyclo-aliphatic, aromatic amines, and optionally a diluent and/or a solvent.

The aromatic halogenated glycidyl ether resins (a,i) used in this invention are derived from halogenated phenol reacted with a keto compound and subsequently with halohydrine and oligomers thereof. The most preferred halogen atoms are bromine and chlorine, the most preferred keto compounds are acetone and formaldehyde. Commercially available halogenated resins are for example EPON 1163, EPIKOTE 5123, EPIKOTE 5119 and EPIKOTE 5112(EPON/EPIKOTE are Resolution Performance Products Trademarks) or any other glycidyl ether of tetra-bromo-Bis-Phenol derivatives which contains more than 10 weight% of brome on resinous material.

The non halogenated epoxy resins (a,ii) used in the composition of this invention is a liquid or medium molecular weight solid resin or a mixture thereof. The epoxy resins used could also contain a generally known additive known in the art to improve flexibility and/or the adhesion capacity to the various substrates.

The preferred non halogenated epoxy resins (a,ii) for the composition of this invention are the diglycidyl ether of Bisphenol A, and/or Bisphenol F and/or polyglycidyl ethers of phenol/cresol-formaldehyde novolacs, and the like. Examples of such resins are: EPIKOTE 828, EPIKOTE 834, EPIKOTE 1001, EPIKOTE 1002, EPIKOTE 154, EPIKOTE 164.

The diluents could be non reactive such as for example benzyl alcohol or nonyl-phenol, or reactive such as a glycidyl ether derivative, a glycidyl ester derivative such as for example CARDURA E10 (CARDURA is a Resolution Performance Products Trademark) or hexadioldiglycidylether. The solvent could be any solvent in which the above resins are soluble and could be used up to 80 weight% on resins (i) and (ii) and diluent.

The hardener part (b) of this invention consist of an aliphatic amine such as diethylenetriamine (DETA), triethylenetetramine (TETA), teraethylenepentamine (TEPA), isophorone diamine (IPD), para-aminocyclohexane methylene (PACM), diamino cyclohexane (DCH), meta-Xylene diamine (mXDA),4,4'-Diamino 3,3'-dimethyl diCyclohexyl methane (DDCM) and adducts of aliphatic amines such as based on DETA,TETA,TEPA,IPD,PACM,DCH, mXDA, DDCM and the like. The most preferred are amines containing a cyclic structure such as IPD, PACM, mXDA and DCH or a mixture thereof. The aromatic amines such as MDA could be used as well even if they are not preferred for the reason discussed above in the introduction.

The most preferred non reactive diluent is benzyl alcohol.

The composition according to this invention could be formulated into a paint to protect metal parts, or for putty systems, or thin laminates such as the one used in tank lamination repair systems.

According to another embodiment of the present invention, therein before specified composition can be used in flooring applications where high chemical resistance is required.

According to still another aspect of the present invention, said above composition is that it could be used in making composite material with glass, carbon or natural fibre by the technology known in the art.

### Test methods:

### REACTIVITY OF THE FORMULATION

Procedure for the determination of the gelation time of blends of epoxy resin and curing agent.

**Gelation time:** the time in minutes required for a mixture of resin and curing agent, maintained at a fixed temperature, to reach the stage in the process of hardening at which the resistance to the movement of a slowly reciprocating plunger immersed in the mixture reaches a specific value.

**Method summary:** Heat the individual components to such a temperature that, after mixing, the final temperature of the mixture will be 0 to 2°C below the test temperature. A 150 g mixture is prepared in a tin. A 100g of the mixture is poured into the aluminum container. The plunger of the gel timer is moved up and down in the resin system. The time elapsed between the end of the mixing step (after 2 min mixing, the time = 0), and the switching off of the gel timer is recorded.

**Apparatus:** Gel timer, according to BS 2782: Part 8, Method 835C, with disposable glass disk plungers. (Tecam Gel Timer, model GT3). Aluminum container: ID 40 to 47 mm, depth not less than 75 mm and wall thickness 0.35 to 0.51 mm.

### VISCOSITY

**Dynamic Viscosity** of the mixture (resin + curing agent) in mPa.s, is measured according to ASTM D 2393. The temperature is 25°C. The apparatus used is a Brookfield DVII, with a spindle LV II (for low viscosities).

### FIBRE WETTING

Procedure for the determination of the fiber wetting behavior of blends of epoxy resin and curing agent.

**Wetting time:** the time in minutes, needed for 2 grams of the mixture to penetrate a glass fiber mat, until the surface goes from a glossy to a matt appearance (the mixture is absorbed by the glass mat).

**Spot size:** diameter of the spot in mm, after curing at 25°C of the 2 grams of the mixture.
Glass mat: a chopped strand mat of size-coated chopped strands, with a thickness of 450 g/m².

### CHEMICAL RESISTANCE

Procedure for the determination of chemical resistance of castings to different test media by immersion.

**Preparation of the test pieces:** Test specimens of the dimensions (80×10×4) mm were cut from the casting sheets by a diamond saw. Moulds used for the castings consisted of 2 steel plates with a 4 mm frame in between. The castings were cured in the mould.

**Resistance test:** The relative rate of absorption of the immersed test pieces was measured according to ASTM D570-98 Standard Test Method. The test media were demineralized water, toluene and aqueous HCl 10%.

The examples given in the description are not limiting the scope of this invention.

### EXAMPLES

Preparation of the formulations:

1. Epoxy resin part: The epoxy resin(s) is (are put in a glass reactor with heating jacket. The temperature is raised to 90°C and stirred for 2 hours.

### Composition

Resin 1: EPIKOTE 828L VE (37.5 weight%), EPIKOTE 1163 (37.5 w%) CARDURA E10 (25w%).
Resin 2: EPIKOTE 862 (42.5 weight%), EPIKOTE 1163 (42.5 w%) Heloxy 66 (15w%).
Resin 3: EPIKOTE 862 (37.5 weight%), EPIKOTE 1163 (37.5 w%) Heloxy 66 (25w%).

Comparative resin a: EPIKOTE 862 (42.5 weight%), EPIKOTE 828L VE (42.5 w%) Heloxy 66 (15w%).

Comparative resin b: EPIKOTE 154 (50 weight%),Heloxy 48(50 w%). Comparative resin c: EPIKOTE 816.

2. Hardener part: The hardener parts are mixed in a glass reactor at ambient temperature for 10 minutes. Note for the comparative hardener and the temperature in the glass reactor was 90°C and the mixing time 2 hours.

### Composition

Hardener 1 : mXDA
Hardener 2 : mXDA (80 w%) benzyl alcohol(BA)(20 w%)
Hardener 3 : mXDA/ IPD/ DCH 90/5/5 (total 80 w%),BA(20 w%)
Hardener 4 : PACM 50w% IPD 45w% DCH 5w%
Hardener 5 : PACM 40w% IPD 36w% DCH 4w% BA 20w%
Hardener 6 : mXDA 50w% DCH 45w% IPD 5w%
Hardener 7 : EPIKURE 3370
Comparative hardener a : DETDA/salicylic acid (90/10)and 20w% BA
Comparative hardener b : EPIKURE 161 (MDA based)

3. Formulation part: The properties of the formulation mixture, like reactivity, fiber wetting are measured on freshly prepared mixtures. The epoxy resin part and the hardener part are stored in a conditioned room at 23°C, weighted in an open tin and mixed with a large spatula at this temperature.

**Table 1: formulations according to the invention**

| Formulation | epoxy resin (R) | hardener (H) in phr* |
|---|---|---|
| A | R1 | H4 18.5 |
| B | R1 | H5 22.8 |
| C | R1 | H6 12.7 |
| D | R1 | H7 28.2 |
| E | R2 | H3 19.1 |
| F | R2 | H1 15.8 |
| G | R3 | H1 16.7 |
| H | R2 | H2 18.96 |

| | | |
|---|---|---|
| * phr: part per hundred resin | | |

**Table 2: comparative formulations**

| Formulation | epoxy resin (comp R) | hardener (comp H or H) in phr* |
|---|---|---|
| comp 1 | comp R c | comp H b 50 |
| comp 2 | comp R a | H1 19.9 |
| comp 3 | comp R b | comp H a 37.46 |

| | | |
|---|---|---|
| * phr: part per hundred resin | | |

**Table 3: Properties**

| Formulation | reactivity * | viscosity ** | fiber wetting wetting time(min)/spot size (mm) |
|---|---|---|---|
| A | 56 | 880 | 3/67 |
| B | 308 | 915 | 6/61 |
| C | 221 | 701 | 1.5/64 |
| D | 282 | 558 | 1.5/72 |
| E | 56 | 780 | not done |
| comp1 | 386 | 855 | 4/75 |
| comp2 | >400 | not done | not done |

| | | | |
|---|---|---|---|
| *: gel time in minutes | | | |
| **: in mPa.S | | | |

**Table 4: Chemical resistance**

| Formulation | water * | toluene* | aqueous HCl* |
|---|---|---|---|
| F | 1.01 | 4.03 | 2.62 |
| G | 1.22 | 3.86 | 4.70 |
| H | 1.12 | 2.92 | 2.00 |
| comp1 | 1.32 | 7.57 | 1.26 |
| comp2 | 1.16 | 2.19 | 10.73 |
| comp3 | 1.76 | 15.71 | 2.22 |

| | | | |
|---|---|---|---|
| *: expressed in weight % and measured after 50 days immersion as given above | | | |

## Claims

1. A curable or polymerizable epoxy resin composition comprising an epoxy part (a) which comprises a combination of: (a,i) at least an aromatic halogenated glycidyl ether resin, (a,ii) a non halogenated glycidyl ether resin and (a,iii) optionally a reactive diluent or/and a solvent and the hardener part (b) comprising aliphatic, cyclo-aliphatic, aromatic amines and optionally diluent and/or a solvent.

2. The composition according to claim 1 **characterized in that** (a,i) has bromine or chlorine as halogen atoms.

3. The composition according to claims 1 and 2 **characterized in that** (a,i) is a halogenated glycidyl ether from Bis-phenol A and Bis-phenol F with an epoxy group content(EGC)of from 2800 to 1100 mmol/kg and most prefer a glycidyl ether of tetrabromobis phenol A with EGC of from 2500 to 1200 mmol/kg.

4. The composition according to any claims 1 to 3 **characterized in that** (a,ii) comprising the diglycidyl ether of Bisphenol A, and/or Bisphenol F and/or polyglycidyl ethers of phenol/cresol-formaldehyde novolacs or a mixture of thereof.

5. The composition according to any claims 1 to 4 **characterized in that** the hardener (b) comprise an aliphatic amine such as diethylenetriamine (DETA), triethylenetetramine (TETA), teraethylenepentamine (TEPA), isophorone diamine (IPD), para-aminocyclohexane methylene (PACM), diamino cyclohexane (DCH), meta-Xylene diamine (mXDA) 4,4'-Diamino 3,3'-dimethyl diCyclohexyl methane (DDCM) and adducts of aliphatic amines on DETA,TETA,TEPA,IPD,PACM,DCH, mXDA, DDCM and the like.

6. The composition according to any claims 1 to 4 **characterized in that** the hardener (b)comprises of isophorone diamine (IPD), para-aminocyclohexane methylene (PACM), diamino cyclohexane (DCH), meta-xylene diamine (mXDA) and adducts based on thereof or a mixture thereof.

7. An shaped article based on any composition of the claims 1 to 6.

8. A coating based on any composition of the claims 1 to 6.

9. A putty system based on any composition of the claims 1 to 6.

10. A flooring system based on any composition of the claims 1 to 6.

## Amended claims

### Amended claims in accordance with Rule 86(2) EPC.

**1.** A ambient temperature curable or polymerizable epoxy resin composition comprising an epoxy part (a) which comprises a combination of:
(a,i) at least an aromatic halogenated glycidyl ether resin,
(a,ii) a non halogenated glycidyl ether resin and
(a,iii) optionally a reactive diluent or/and a solvent and the hardener part (b) comprising aliphatic, cycloaliphatic, aromatic amines and optionally diluent and/or
a solvent.

**2.** The composition according to claim 1 **characterized**
**in that** (a,i) has bromine or chlorine as halogen atoms.

**3.** The composition according to claims 1 and 2 **characterized in that** (a,i) is a halogenated glycidyl ether from Bis-phenol A and Bis-phenol F with an epoxy group content(EGC)of from 2800 to 1100 mmol/kg and most prefer a glycidyl ether of tetrabromobis phenol A with EGC of from 2500 to 1200 mmol/kg.

**4.** The composition according to any claims 1 to 3 **characterized in that** (a,ii) comprising the diglycidyl ether of Bisphenol A, and/or Bisphenol F and/or polyglycidyl ethers of phenol/cresol-formaldehyde novolacs or a mixture of thereof.

**5.** The composition according to any claims 1 to 4 **characterized in that** the hardener (b) comprise an aliphatic amine such as diethylenetriamine (DETA), triethylenetetramine (TETA), teraethylenepentamine (TEPA), isophorone diamine (IPD), para-aminocyclohexane methylene (PACM), diamino cyclohexane (DCH), meta-Xylene diamine (mXDA) 4,4'-Diamino 3,3'-dimethyl diCyclohexyl methane (DDCM) and adducts of aliphatic amines on DETA,TETA,TEPA,IPD,PACM,DCH, mXDA, DDCM and the like.

**6.** The composition according to any claims 1 to 4 **characterized in that** the hardener (b)comprises of isophorone diamine (IPD), para-aminocyclohexane methylene (PACM), diamino cyclohexane (DCH), meta-xylene diamine (mXDA) and adducts based on thereof or a mixture thereof.

**7.** An shaped article based on any composition of the claims 1 to 6.

**8.** A coating based on any composition of the claims 1 to 6.

**9.** A putty system based on any composition of the claims 1 to 6.

**10.** A flooring system based on any composition of the claims 1 to 6.
